# EUROPEAN PATENT APPLICATION

(11) **EP 1 643 438 A2**
(43) Date of publication of application: **05.04.2006**
(21) Application number: 05020343.9
(22) Date of filing: 19.09.2005
(51) Int. Cl.: G06Q 30/00

(54) **Bid management unit, bid management method and computer program product**

(30) Priority: 28.09.2004 JP 2004281411
(71) Applicant: DeeCorp Limited, Minatu-Ku, Tokyo 106-0047 (JP)
(72) Inventor: Hotta, Hisashi, Tokyo 106-0047 (JP)
(74) Representative: Glawe, Delfs, Moll

(57) **Abstract**

The bid management unit has a lockout management section that determines whether to impose restrictions on submission of bid information by a participant terminal according to a predetermined determination condition, and a lockout timer that control a timing to perform determination in the lockout management section. The bid management unit activates the lockout timer upon occurrence of a predetermined lockout timer start event. Further, the bid management unit imposes restrictions on receipt of bid information from the participant terminal according to the determination in the lockout management section.

## Description

### BACKGROUND OF THE INVENTION

### 1. Field of the Invention

The present invention relates to a bid management unit that manages bids submitted by a plurality of participant terminals and, particularly, to a bid management unit and a bid management method capable of imposing restrictions on a participant terminal submitting a bid, and program for causing a computer to implement the method.

### 2. Description of Related Art

Auction service is a type of electronic purchase service that provides a product or service item (which is referred to hereinafter simply as the item) through a communication network such as Internet. The auction service involves forward auction and reverse auction. The forward auction is so-called bid-up auction where buyers make bids to purchase an item presented by a supplier and the buyer who has submitted the most favorable bid price, which is generally the highest bid price, becomes a successful bidder. In the reverse auction, on the other hand, a buyer presents desired procurement terms such as a desired item's specifications, price, quantity, delivery date and delivery place. Then, suppliers who can satisfy the buyer's terms of procurement make their bids, and the supplier who has submitted the most favorable bid price, which is generally the lowest bid price, becomes a successful bidder. There have been proposed systems to implement the auction service. For example, a system for implementing the reverse auction service on a communication network is disclosed in United States Patent No. 5794207, Japanese Unexamined Patent Publication No. 2003-281409 and 2002-109286, for example.

In conventional forward auction service and reverse auction service, which are referred to hereinafter simply as the auction service, participants who are participating in a bid market for a certain item can submit bids any time during a bid market open period. Thus, in often cases, participants spend a considerable amount of time during the bid market open period just to passively observe the bid status of other participants, and active bidding is not performed until a bid closing time approaches.

Further, in the conventional auction service, participants who are no longer able to submit more favorable bids than other participants can stay in the bid market to view the bidding status of other participants, thereby obtaining information such as a contract price. However, under the circumstance of active use of the auction service in business-to-business transaction, it is undesirable to allow the participant who no longer has or does not originally have the intention to win the bid to know closing bid information such as a contract price. This is because the information about an item transaction amount between companies is normally treated as confidential, and neither a company that procures the item nor a company that has won the bid wishes to inform the third party of the contract price.

### SUMMARY OF THE INVENTION

As described above, the conventional auction service has a problem that inactive participant can stay in a bid market. The present invention has been made to solve this problem and an object of the invention is to provide a bid management unit, a bid management method and a computer program product capable of excluding an inactive participant from a bid market.

To these ends, according to an aspect of the present invention, there is provided a bid management unit that receives bid information from a plurality of participant terminals connected through a communication network and implements bid management, which includes a communication section receiving a bid information from the plurality of participant terminals through the communication network; a determination section determining whether to impose a restriction on submission of new bid by a participant during a bid market open period according to the bid information received at the communication section and a predetermined determination condition; and a restriction section imposing a restriction on submission of new bid information by a participant terminal of the participant determined to be restricted by the determination section.

This configuration enables to impose restrictions on submission of a bid by a participant terminal which has sent the bid information that does not satisfy a predetermined condition. Therefore, by setting a determination condition that applies to a participant who does not make a positive bid, it is possible to impose restrictions on submission of bids or transmission of bid information for an inactive participant.

The bid management unit preferably includes a timer starting upon occurrence of a timer start event and controlling a timing to perform determination by the determination section.

It is thereby possible to impose restrictions on inactive participants submitting bids by performing determination according to a predetermined determination condition at a time when a timer terminates after a given time period from occurrence of a timer start event such as start of a bid market, for example.

In the bid management unit, the timer is preferably capable of starting and stopping separately for each of the plurality of participant terminals. It is thereby possible to perform lockout determination at a different determination timing for each participant terminal.

Further, in the bid management unit, the timer may stop upon occurrence of a timer stop event.

Furthermore, the bid management unit may be configured so that if a new timer start event occurs after the timer stops upon occurrence of the timer stop event, the timer starts upon occurrence of the new timer start event. Since this enables to perform lockout determination a plurality of times upon occurrence of a lockout timer start event, it is possible to impose restrictions on participation in a bid market and also provide a bid market environment where participants submit their bids again and again.

In addition, the bid management unit may be configured so that prior to implementation of determination by the determination section, an alert is sent to the participant terminal whose bid submission is likely to be restricted by the determination of the determination section. It is thereby possible to avoid that the participant who intends to submit bids is locked out due to miss the progress of a lockout determination timing.

The determination section may impose a restriction on submission of a bid by a participant whose rank order based on the bid information is lower than a predetermined border rank order.

According to another aspect of the invention, there is provided a bid management method for imposing a restriction on receipt of bid information in a bid management unit that receives bid information from a plurality of participant terminals connected through a communication network. The method includes activating a timer to control a timing to determine whether to impose a restriction on receipt of the bid information upon occurrence of a timer start event; determining whether to impose a restriction on receipt of the bid information transmitted from the participant terminals according to a predetermined determination condition at a timing controlled by the timer; and imposing a restriction on receipt of the bid information according to the determination.

According to yet another aspect of the invention, there is provided a computer program product, in a computer readable medium, including instructions executed by a computer connectable to a plurality of participant terminals through a communication network, for causing the computer to implement a bid management process for imposing a restriction on receipt of bid information transmitted from the participant terminals. The bid management process includes activating a timer to control a timing to determine whether to impose a restriction on receipt of the bid information upon occurrence of a timer start event; determining whether to impose a restriction on receipt of the bid information transmitted from the participant terminals according to a predetermined determination condition at a timing controlled by the timer; and imposing a restriction on receipt of the bid information according to the determination.

The bid management method and the computer program product enable to place a ban on submission of bids by a participant terminal relevant for a determination condition by performing determination according to a predetermined determination condition at a time when a timer terminates after a given time period from occurrence of a timer start event such as start of a bid market, for example. By setting a lockout determination condition that applies to a participant who does not make positive bids, it is possible to impose restrictions on submission of bids by an inactive participant.

The present invention can provide a bid management unit, a bid management method, and a computer program product capable of excluding an inactive participant from a bid market.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a block diagram of a bid management unit of the present invention;
Fig. 2 is a view showing an example of a lockout status table;
Fig. 3 is a block diagram of a bid management unit of the present invention;
Fig. 4 is a process flow diagram of a bid management unit of the present invention;
Fig. 5 is a flow diagram showing a lockout determination process in a bid management unit of the present invention;
Fig. 6 is a view showing an example of the relationship between a lockout timer and a border rank order;
Fig. 7 is a view to describe a lockout operation in a bid management unit of the present invention;
Fig. 8 is a flow diagram showing a lockout determination process in a bid management unit of the present invention;
Fig. 9 is a flow diagram showing a lockout determination process in a bid management unit of the present invention;
Fig. 10 is a flow diagram showing a lockout determination process in a bid management unit of the present invention;
Fig. 11 is a flow diagram showing a lockout determination process in a bid management unit of the present invention;
Fig. 12 is a view to describe a lockout operation in a bid management unit of the present invention;
Fig. 13 is a timing chart to describe a lockout operation in a bid management unit of the present invention; and
Fig. 14 is a flow diagram showing a re-bidding process in a bid management unit of the present invention.

### DESCRIPTION OF THE PREFERRED EMBODIMENTS

### First Embodiment

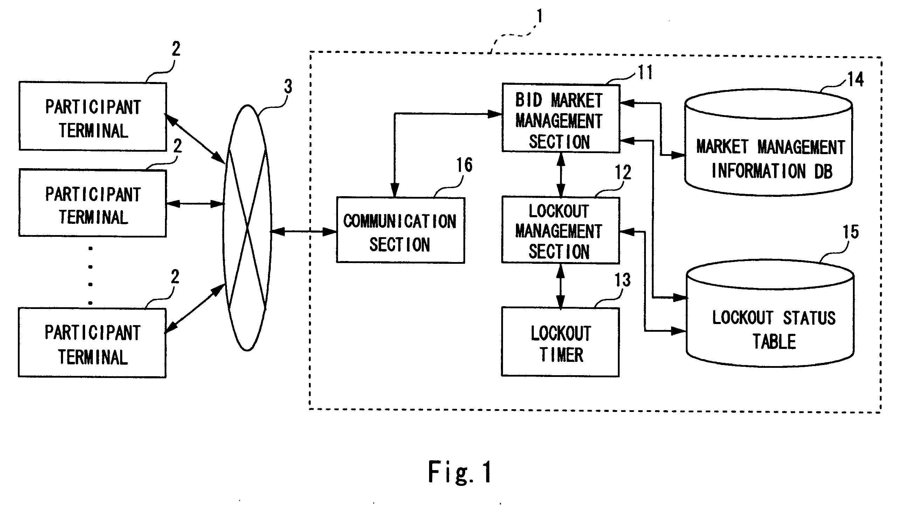

Fig. 1 shows the configuration of a bid management unit 1 according to a first embodiment of the invention. The bid management unit 1 implements electronic auction to determine a successful bidder based on bids submitted by a plurality of participants. A bid market management section 11 is a functional part that controls a bid market for determining a successful bidder from a plurality of participants. The bid market management section 11 holds the market and implements auction services that compares bid information transmitted from a plurality of participant terminals 2 to determine the participant who has submitted the most favorable bid information as a successful bidder. The bid information contains at least an evaluation parameter that is required for ranking the bids. The evaluation parameter is typically a bid price; however, another evaluation parameter such as a price per unit quantity of an item may be used.

A lockout management section 12 is a functional part that determines lockout of a participant terminal according to a lockout determination condition. The lockout means to impose restrictions on participation of a participant terminal 2 in a bid market such as submission of a bid and access to bid status. The lockout management section 12 performs lockout determination according to a lockout determination condition upon reaching a lockout determination timing during a bid market open period so as to determine the participant terminal 2 to be locked out.

A lockout timer 13 measures the timing when the lockout management section 12 performs lockout determination. The lockout timer 13 starts upon occurrence of a lockout timer start event.

A market management information DB 14 is a database to store information that is required for holding a bid market. Specifically, it stores information such as bid market participant information including participant ID and login password for a bid market, a scheduled bid date, a starting price of a bid market, and the number of successful bidders. Further, the market management information DB 14 stores bid information submitted by the participant terminals 2 during the bid market open period.

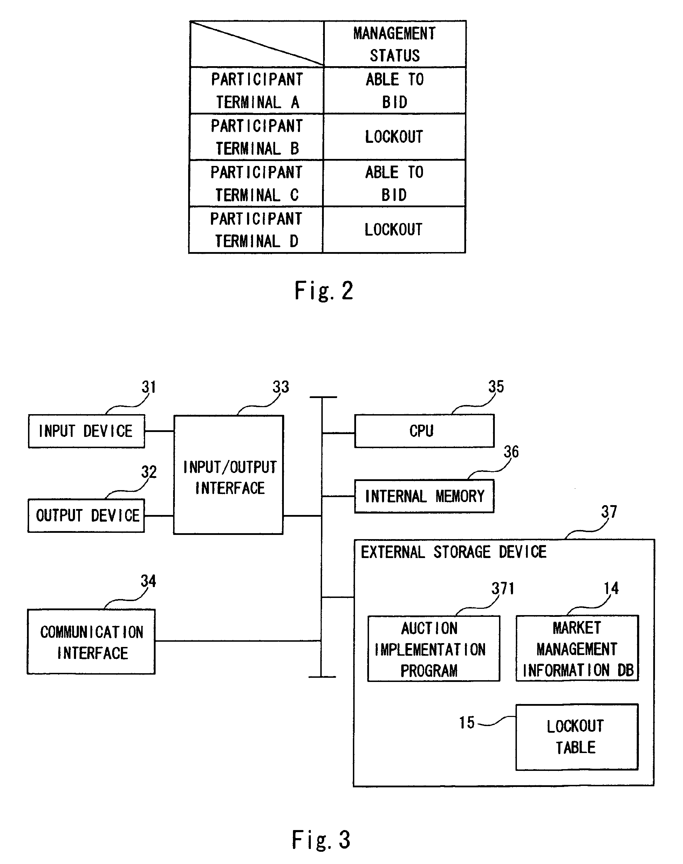

A lockout status table 15 stores the status that indicates if each participant terminal 2 is able to submit a bid or it is locked out, which is referred to hereinafter as the lockout status. Fig. 2 shows an example of the lockout status table 15. The lockout status table 15 of Fig. 2 shows that, of four participant terminals A to D that participate in a bid market, the participant terminals A and C are able to submit their bids while the participant terminals B and D are locked out and restricted to submit their bids and access the bid status. The lockout status table 15 is updated according to an instruction from the lockout management section 12.

A communication section 16 is a functional part that control communication with each participant terminal 2 through a communication network 3.

The bid management unit 1 may be composed of a typical computer system. For example, as shown in Fig. 3, the bid management unit 1 includes an input device 31 such as a keyboard and a mouse, an output device 32 such as a monitor and a printer, an input/output interface 33 for controlling their input and output, a communication interface 34 for transmitting and receiving data through a network such as LAN, telephone network, and packet exchange network, a CPU 35 for executing arithmetic processing, an internal memory 36, and an external storage device 37. The external storage device 37 may be a hard disk device, for example, which is placed in the same computer together with other components. Instead, it may be a physically separated database or a combination of a plurality of hard disks.

The CPU 35 is a central control unit that executes each processing in the bid management unit 1 according to control program. The control program is program for causing the CPU 35 to execute the processing on the bid management unit 1, and it is stored in the internal memory 36 or the external storage device 37. The program may be acquired from remote memory through the communication network.

The external storage device 37 stores auction implementation program 371, the market management information DB 14, and the lockout status table 15.

The auction implementation program 371 causes the computer system to implement the functions of the bid market management section 11 and the lockout management section 12. Further, the auction implementation program 371 implements the function of the lockout timer 13 by acquiring time information from an internal clock in the computer system. The auction implementation program 371 is loaded to the internal memory 36 and executed on the CPU 35. The CPU 35 operates according to the auction implementation program 371, thereby allowing the computer system to operate as the bid management unit 1 of this embodiment.

The auction implementation program 371 may be stored in a variety of storage media, not limited to the external storage device 37 such as a hard disk, and may be transmitted through a communication medium. The storage media include a flexible disk, hard disk, magnetic disk, magnetic optical disk, CD-ROM, DVD, ROM cartridge, RAM memory cartridge with battery backup, flash memory cartridge, nonvolatile RAM cartridge, and so on. The communication media include wired communication media such as a telephone line and wireless communication media such as a microwave line, including Internet.

Referring back to Fig. 1, the participant terminal 2 is used by a participant who participates in a bid market and submits bids. The participant terminal 2 transmits bid information input by the participant to the bid management unit 1 and displays auction progress information transmitted from the bid management unit 1. The participant terminal 2 may be a personal computer (PC), for example, which includes CPU, ROM, RAM, hard disk, display, keyboard, mouse, and so on. The participant terminal 2 may exchange data with the bid management unit 1 and display auction progress information and final results by executing Web browser program stored in the hard disk, for example, using TCP/IP, HTTP protocol.

The network 3 is a communication network such as Internet, public network, leased line, and mobile communication network.

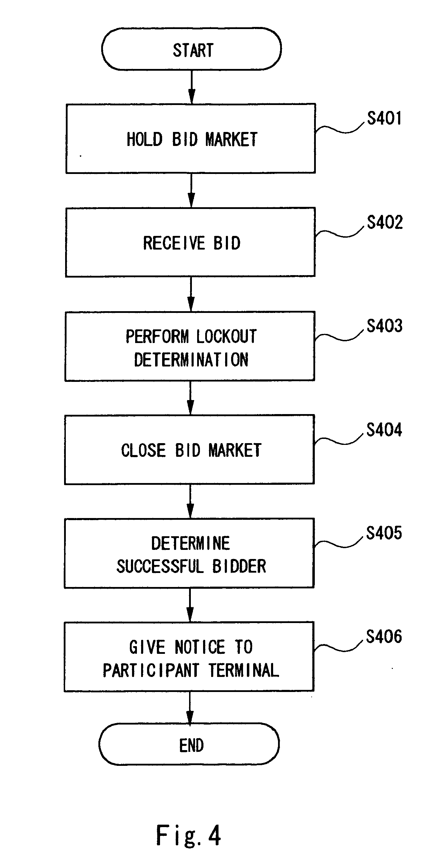

The entire flow of the auction process performed by the bid management unit 1 is described hereinafter with reference to Fig. 4. First, in Step S401, the bid management unit 1 starts a bid market and gives notice of market start to each participant terminal 2. Receiving the market start notice, each participant terminal 2 logs on the bid market implemented by the bid management unit 1. To login, the participant terminal 2 accesses the bid management unit 1 by specifying an ID and login password assigned to a participant who uses the participant terminal 2, and the bid management unit 1 verifies the specified ID and login password by comparing them with an ID and login password stored in the market management information DB 14, for example.

In Step S402, the bid management unit 1 receives bid information transmitted from the participant terminal 2 through the communication network 3 and ranks bids according to the received bid information. In Step S403, the bid management unit 1 performs lockout determination according to a lockout determination condition. The lockout determination process is detailed later. The bid management unit 1 performs Steps S402 and S403 during the bid market open period and then closes the bid market at a bid market closing time (S404) and determines a successful bidder (S405). In Step S406, the bid management unit 1 informs participants of the successful bidder. Though the bid market closing time is normally predetermined in the market management information DB 14, it may be extended depending on the competitive situation of the bid market.

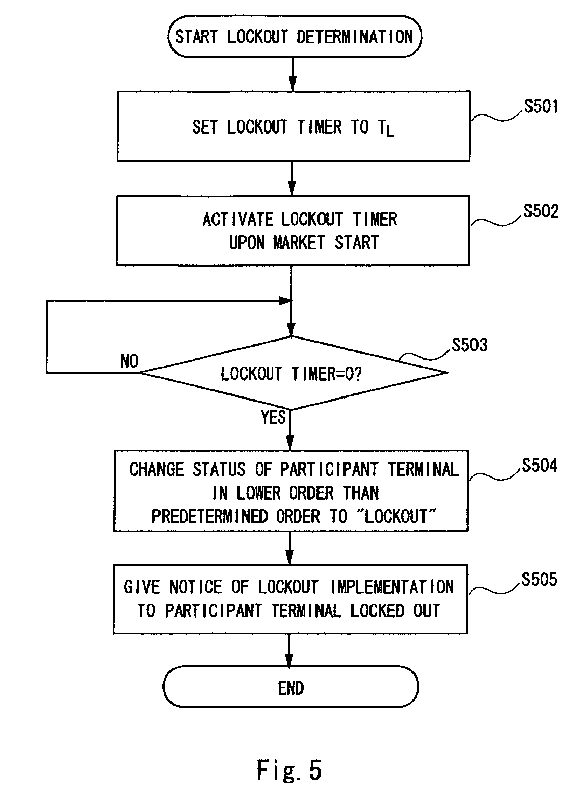

The detail of the lockout determination process, which corresponds to Step S403 of Fig. 4, is described hereinafter with reference to the flowchart of Fig. 5. The lockout determination process performs determination under various conditions with a combination of a lockout determination condition and a lockout timer start event. This embodiment uses the lockout determination condition that locks out a participant placed in a rank order, which is determined by a bid price, that is lower than a predetermined border rank order. The lockout timer start event is start of a bid market, and lockout determination is performed at the time point when a given time has passed since the start of the bid market.

In Step S501, the lockout management section 12 initializes the lockout timer 13. In this embodiment, the lockout timer 13 may be set in common to all participant terminals. TL represents a time from the start of the lockout timer 13 to implementation of lockout determination. For example, if TL=30, lockout determination is performed after 30 minutes from the start of the bid market. Then, in Step S502, the lockout management section 12 activates the lockout timer 13 at the timing when the bid market management section 11 starts the bid market.

In Step S503, the lockout management section 12 determines if the lockout timer 13 that has started countdown upon start of the bid market reaches zero. When the lockout timer 13 reaches zero, the lockout management section 12 locks out the participant terminal whose rank order determined by the bid price is lower than a predetermined border rank order. Specifically, the lockout management section 12 changes the status of the participant terminal to be locked out in the lockout status table 15 to "lockout" in Step S504.

Finally, in Step S505, the lockout management section 12 gives an instruction to the bid market management section 11 so as to transmit lockout implementation information that indicates implementation of lockout to the participant terminal which has been locked out in the previous step.

As described above, with the lockout determination process where a lockout determination condition is a border rank order and a lockout timer start event is start of a bid market, it is possible to impose restrictions on participation of a participant who does not submit an effective bid compared with other participants in the bid market and also promote the participants who want to avoid the lockout to make positive bids.

Though the flowchart of Fig. 5 describes the case of performing the lockout determination once after the start of the bid market, it is feasible to perform the lockout determination at a plurality of time points during the bid market open period to select the participants in stages. For example, the process may start countdown of the lockout timer 13 with TL=60, then performs lockout determination where a border rank order is 3rd place when the lockout timer 13 reaches TL1=30, and further performs lockout determination where a border rank order is 2nd place when the lockout timer 13 reaches TL2=0.

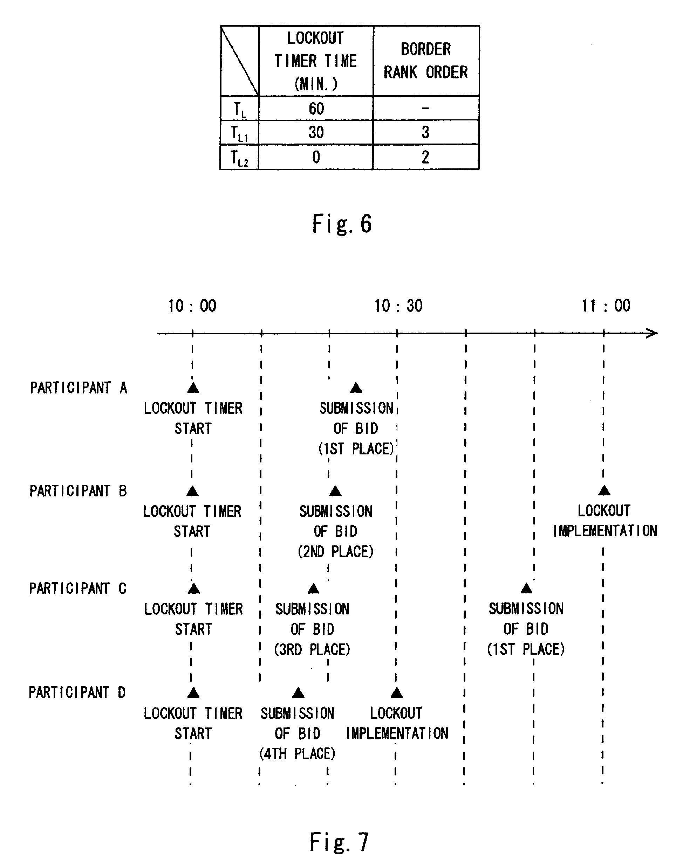

An example of a bid market to perform lockout determination according to the table of Fig. 6 is described hereinafter with reference to Fig. 7. It is assumed that the bid market management section 11 starts a bid market at 10:00. At this time, the lockout management section 12 activates the lockout timer 13 with TL=60. After 30 minutes from the start of bidding, which is when the remaining time of the lockout timer 13 is 30 minutes, the first lockout determination is performed. In this example, the ranking of participants A to D at this time is: the 1st place is participant A, 2nd place is participant B, 3rd place is participant C, and 4th place is participant D. Since the border rank order of the first lockout determination is 3rd place, the participant D in the 4th place (specifically, the participant terminal used by the participant D) is locked out. Then, after 60 minutes from the start of bidding when the remaining time of the lockout timer 13 reaches 0, the second lockout determination is performed. The ranking at this time is: 1st is a participant C, 2nd is a participant A, and 3rd is a participant B. Since the border rank order of the second lockout determination is 2nd place, the participant B in the 3rd place is locked out.

Due to the lockout determination, the participants need to keep making favorable bids in order to ensure a higher order than the border rank order at the lockout determination timing. This induces positive bid submission by participants and locks out the participants who do not make positive bids to exclude them from the bid market.

Further, in addition to the notice after lockout determination made in Step S505 of Fig. 5, it is feasible to send an alert to a participant terminal which is placed in a lower order than the border rank order and thus likely to be locked out prior to the lockout determination timing, which is before the lockout timer 13 reaches zero. It is thereby possible to avoid that the participant who intends to submit a bid is locked out due to miss the progress of the lockout determination timing.

The above embodiment describes the case where the lockout timer start event is start of a bid market so that the lockout determination is performed when a given time has passed since the start of market. However, the lockout timer start event is not limited to the bid market start but may be various alternatives. For example, the lockout timer start event may be submission of the first bid in the bid market.

### Second Embodiment

As described above, the lockout determination process can implement a variety of determination by a combination of a lockout determination condition and a lockout timer start event. Though the first embodiment describes an example of the determination condition that locks out the participant terminal in a lower order than a border rank order, the determination condition may be altered. For example, in revere auction service, a participant terminal of a participant whose bid price is higher than a reference value may be locked out. In the second embodiment, the lockout determination condition in the lockout determination process is to lock out a participant terminal of a participant whose bid price is higher than a reference value, and the lockout timer start event is start of a bid market, which is the same as in the first embodiment. The configuration of the bid management unit 1 of this embodiment is the same as in the first embodiment and thus not described here.

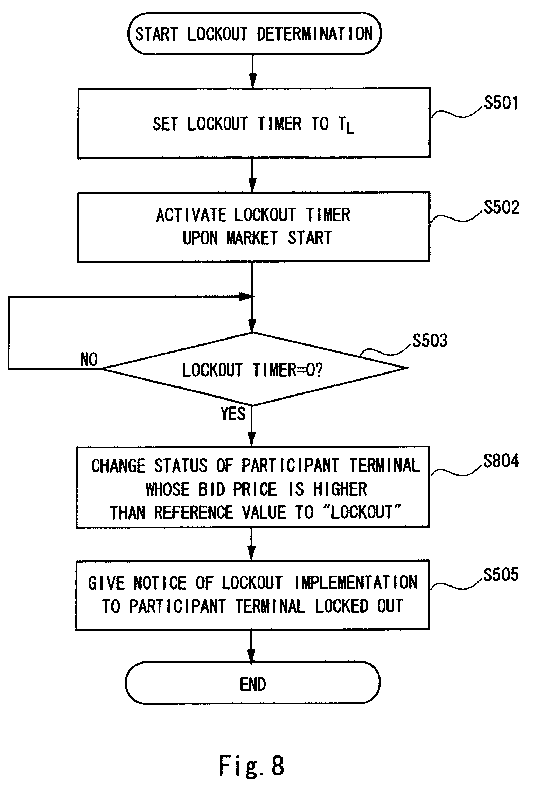

Fig. 8 shows a lockout determination process flow according to this embodiment. In the flowchart of Fig. 8, Steps S501 to S503 and S505, except for Step S804, are the same as in the flowchart of the first embodiment shown in Fig. 5, thus denoted by the same reference numerals and not described here. In Step S804, the lockout management section 12 locks out the terminal of the participant whose bid price submitted by the time the lockout timer 13 reaches zero is higher than a predetermined reference value. Specifically, the lockout management section 12 changes the status of the participant terminal to be locked out to "lockout" in the lockout status table 15.

Further, it is feasible to set a plurality of lock out determination timings during the bid market open period and perform the lockout determination by gradually reducing a reference price, if it is reverse auction service, thereby selecting the participants in stages.

This lockout determination process enables to impose restrictions on participation of a participant who does not submit an effective bid compared with other participants in the bid market and also promote the participants who want to avoid the lockout to make positive bids.

### Third Embodiment

A bid management unit of a third embodiment implements a lockout determination process where a lockout determination condition is whether a bid is submitted by a participant terminal and a lockout timer start event is start of a bid market, which is the same as in the first embodiment. The configuration of the bid management unit 1 of this embodiment is the same as in the first embodiment and thus not described here.

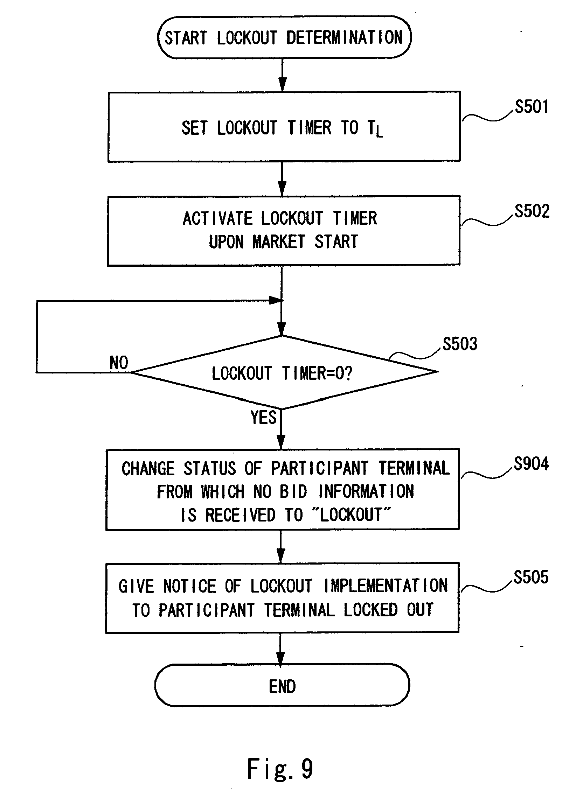

Fig. 9 shows a lockout determination process flow according to this embodiment. In the flowchart of Fig. 9, Steps S501 to S503 and S505, except for Step S904, are the same as in the flowchart of the first embodiment shown in Fig. 5, thus denoted by the same reference numerals and not described here. In Step S904, the lockout management section 12 locks out the participant terminal from which the bid management unit 1 has received no bid information at the time the lockout timer 13 reaches zero. Specifically, the lockout management section 12 changes the status of the participant terminal to be locked out to "lockout" in the lockout status table 15.

This lockout determination process enables to keep a participant who has submitted no bid during a certain time period from the start of the bid market out of the bid market and also promote the participants who want to avoid the lockout to submit bit earlier. Fourth Embodiment

A bid management unit of a fourth embodiment implements a lockout determination process where a lockout determination condition is whether a participant terminal logs on a bid market, and a lockout timer start event is start of a bid market, which is the same as in the first embodiment. The configuration of the bid management unit 1 of this embodiment is the same as in the first embodiment and thus not described here.

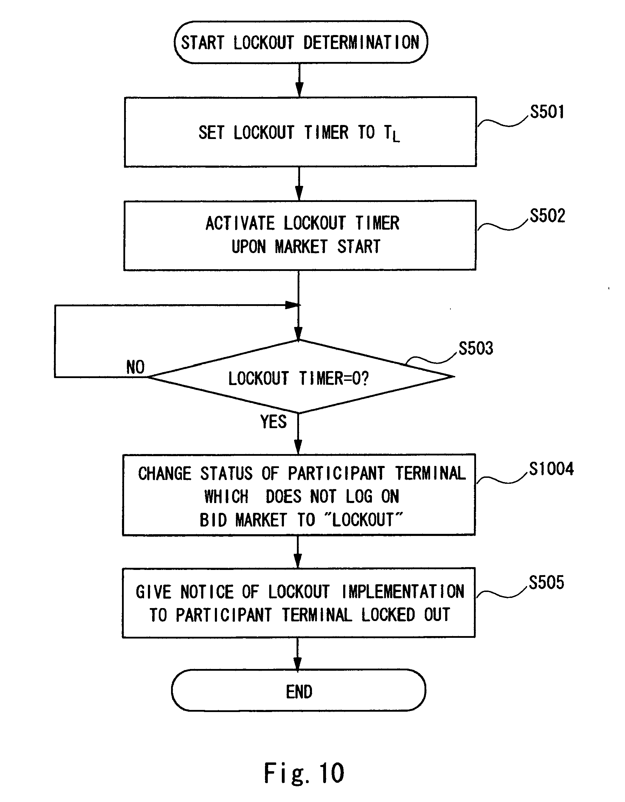

Fig. 10 shows a lockout determination process flow according to this embodiment. In the flowchart of Fig. 10, Steps S501 to S503 and S505, except for Step S1004, are the same as in the flowchart of the first embodiment shown in Fig. 5, thus denoted by the same reference numerals and not described here. In Step S1004, the lockout management section 12 locks out the participant terminal which has not logged on the bid market implemented by the bid management unit 1 at the time the lockout timer 13 reaches zero. Specifically, the lockout management section 12 changes the status of the participant terminal to be locked out to "lockout" in the lockout status table 15.

This lockout determination process enables to impose restrictions on participation in the bid market of a participant who has not accessed a bid market during a certain time period from the start of the bid market and also promote the participants who want to avoid the lockout to submit bit earlier. Fifth Embodiment

The lockout determination timing described in the first to fourth embodiments is common to all participant terminals. In a fifth embodiment, start and stop of the lockout timer 13 are set for each participant terminal according to occurrence of a bid and a rank order of a participant after submission of the bid.

A bid management unit of this embodiment implements a lockout determination process where a lockout determination condition is whether a bid is submitted by a participant terminal and a lockout timer start event is receipt of a bid from another participant. Further, this embodiment sets a lockout timer stop event for stopping the lockout timer 13 that has once started.

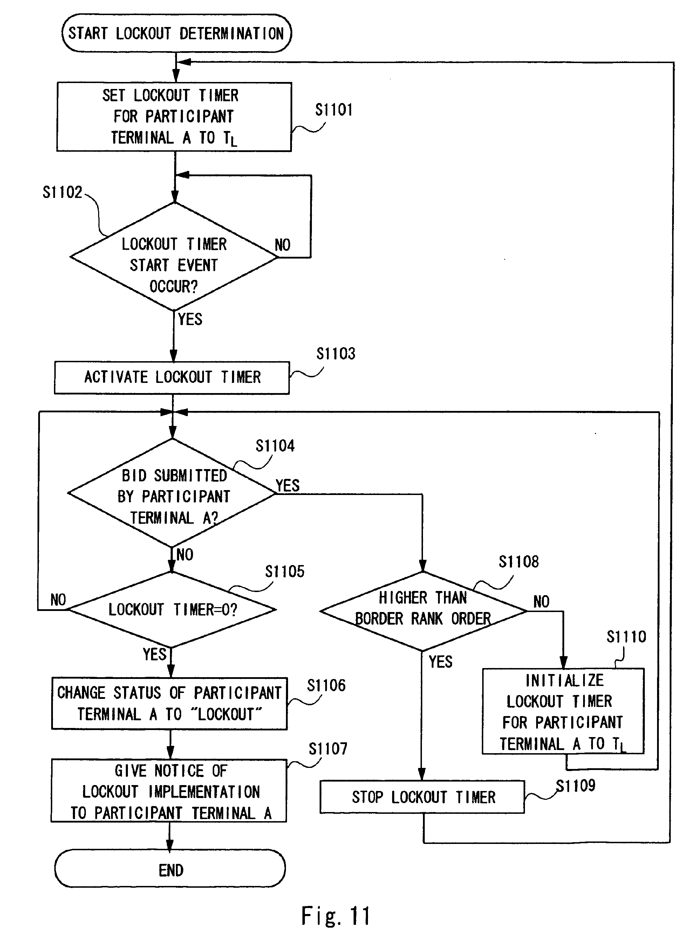

In the following, a case where a lockout timer start event for each participant is submission of a bid by another participant and a lockout timer stop event is when a participant's rank order exceeds a border rank order as a result of submission of a bid is described. The configuration of the bid management unit 1 of this embodiment is the same as in the first embodiment and thus not described here. Fig. 11 shows a lockout determination process flow according to this embodiment. Step S1101 initializes the lockout timer 13 for a participant terminal A. In this embodiment, the lockout timer 13 starts and stops separately for each participant terminal. The following description focuses on one of a plurality of participant terminals, which is referred to as the participant terminal A for convenience of explanation.

Step S1102 determines if a lockout timer start event that triggers activation of the lockout timer 13 has occurred or not. The lockout timer start event for the participant terminal A in this embodiment is submission of a bid by a participant terminal different from the participant terminal A. Thus, if the bid management unit 1 receives a bid from a participant terminal different from the participant terminal A, the lockout management section 12 activates the lockout timer 13 for the participant terminal A (S1103).

Step S1104 determines if the bidmanagement unit 1 receives a bid from the participant terminal A. If the lockout timer 13 for the participant terminal A reaches zero prior to receipt of a bid from the participant terminal A (S1105), the lockout management section 12 locks out the participant terminal A (S1106). Specifically, the lockout management section 12 changes the status of the participant terminal A to "lockout" in the lockout status table 15. In Step S1107, the lockout management section 12 gives an instruction to the bid market management section 11 so as to transmit lockout implementation information that indicates implementation of lockout to the participant terminal A which has been locked out.

On the other hand, if Step S1104 determines that the bid management unit 1 receives a bid from the participant terminal A, the process proceeds to Step S1108 to determine if the rank order of the participant terminal A after the receipt of the bid is equal to or higher than a predetermined border rank order. If S1108 determines it to be the predetermined border rank order or higher, the lockout management section 12 stops the lockout timer 13 for the participant terminal A in S1109. Then, the process returns to Step S1101 to reset the lockout timer 13. The lockout timer 13 for the participant terminal A thereby stops until the lockout timer start event (receipt of a bid from another participant terminal) occurs again.

If, on the other hand, S1108 determines the rank order of the participant terminal A to be lower than the predetermined border rank order, the lockout management section 12 initializes the lockout timer for the participant terminal A (S1110) and the process returns to Step S1104. Thus, the lockout timer 13 for the participant terminal A starts the countdown over again from TL without stopping.

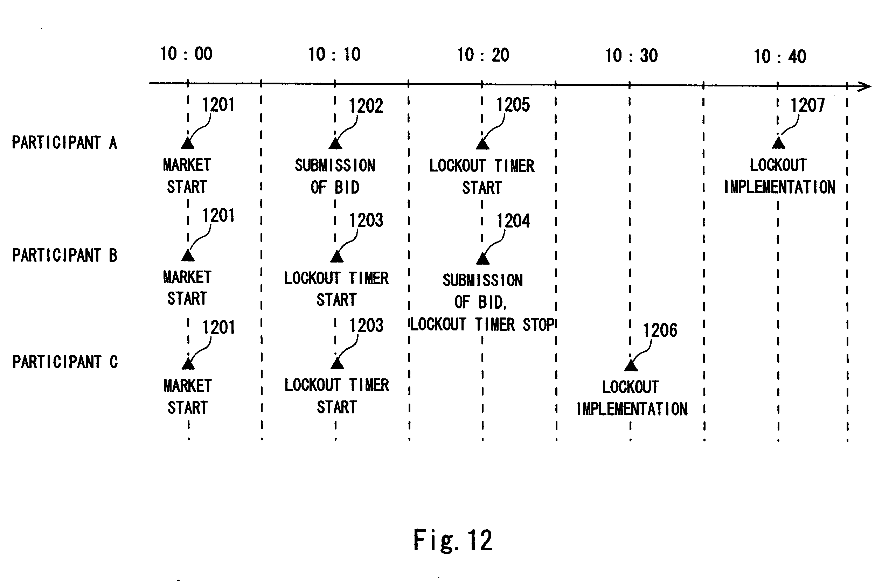

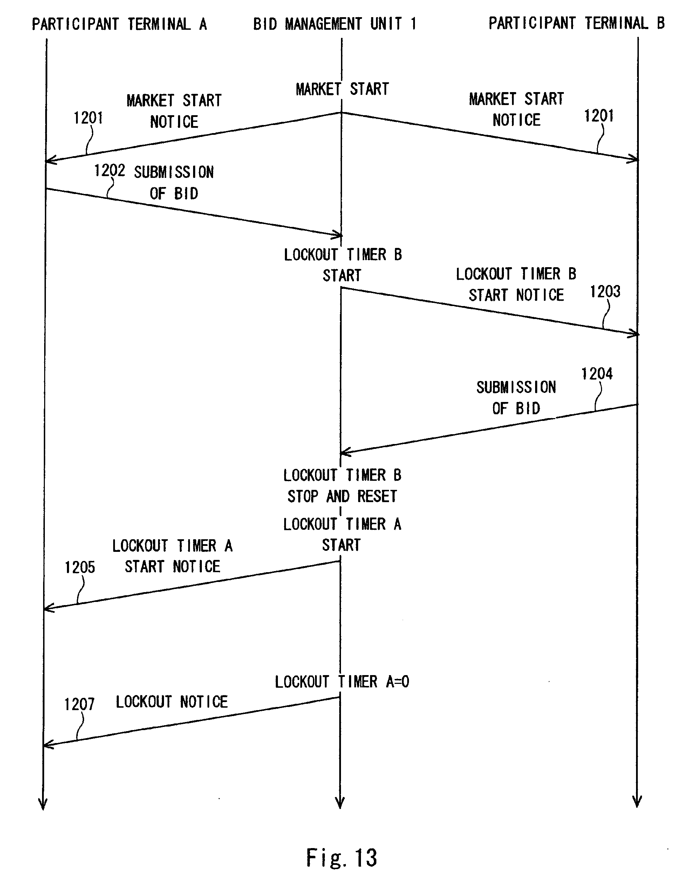

An example of a bid market where lockout determination is performed according to the above lockout determination process is described hereinafter with reference to Figs. 12 and 13. Fig. 12 shows an example where a lockout timer time TL is 20 minutes and a border rank order is 1st place. Fig. 13 is a timing chart showing the processing between participant terminals A and B and the bid management unit 1 in the bid market of Fig. 12. Referring to Fig. 12, it is assumed that the bid market management section 11 starts a bid market at 10:00. At this time, the lockout management section 12 sets the lockout timer 13 to TL=20. Then, at 10:10, the participant terminal A submits a bid (1202) . Upon submission of the bid by the participant terminal A as a lockout timer start event, the lockout timer 13 of the participant terminals B and C is activated (1203).

Then, at 10:20, the participant terminal B submits a new bid so that its rank order is in the 1st place. At this time, according to the process of Steps S1104, S1108 and S1109, the lockout management section 12 stops the lockout timer 13 for the participant terminal B (1204). Since submission of a bid by the participant terminal B serves as a lockout timer start event for the participant terminal A, the lockout management section 12 activates the lockout timer 13 for the participant terminal A (1205).

After that, if the bid management unit 1 receives no bid from any participant terminal, it locks out the participant terminal C at 10: 30 when the lockout timer 13 for the participant terminal C reaches zero (1206) and further locks out the participant terminal A at 10:40 when the lockout timer 13 for the participant terminal A reaches zero (1207).

The lockout determination process of this embodiment enables to lock out the participant who submits no bid in spite of being placed in a lower rank due to submission of a bid from another participant. It is thereby possible to impose restrictions on participation of the participant in a bid market and also provide a bid market environment where participants submit their bids repeatedly.

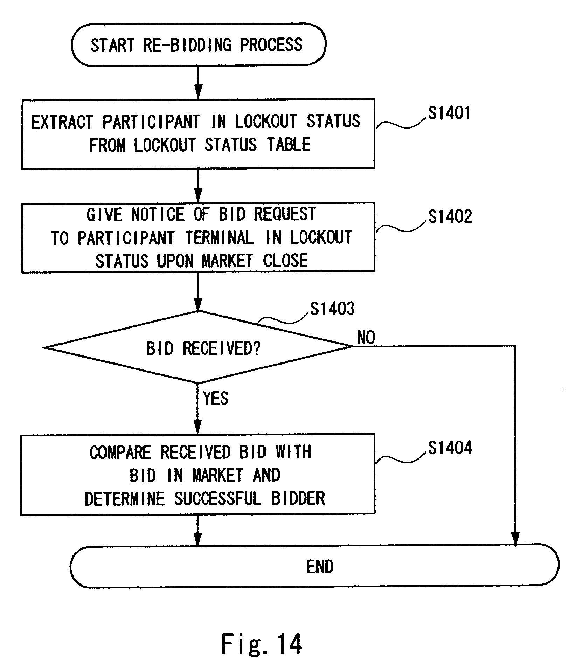

The above lockout process can lock out a participant who intends to compete but delays submitting a bid. It is therefore preferred to give an opportunity to submit a bid again for the participant who has been locked out in spite of their intention to compete. This can bring better bid results to a bid market host. The process of enabling re-bidding is preferably performed before determination of a successful bidder after the bid market is closed. Fig. 14 shows an example of the process flow of re-bidding from a participant terminal that is locked out.

In Step S1401, the lockout management section 12 extracts a participant terminal in the lockout status by referring to the lockout status table 15. In Step S1402, the lockout management section 12 gives an instruction to the bid market management section 11 so as to transmit a re-bidding request to the participant terminal extracted in Step S1401. The bid market management section 11 thereby transmits a re-bidding request to the participant terminal 2 that is locked out. The bid market management section 11 determines if the participant terminal that has received the re-bidding request submits a bid (S1403). If a bid is submitted, the bid market management section 11 compares the bid with a final bid in the bid market and determines the participant who has submitted the most favorable bid to be a successful bidder (S1404). On the other hand, if no bid is submitted, the re-bidding process ends and the bid market management section 11 determines a successful bidder according to the result in the bid market.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A bid management unit that receives bid information from a plurality of participant terminals connected through a communication network and implements bid management, comprising:
a communication section receiving bid information from the plurality of participant terminals through the communication network;
a determination section determining whether to impose a restriction on submission of new bid information by a participant during a bid market open period according to the bid information received at the communication section and a predetermined determination condition; and
a restriction section imposing a restriction on submission of new bid information by a participant terminal of the participant determined to be restricted by the determination section.

2. The bid management unit according to claim 1, wherein the restriction section makes the participant terminal of the participant determined to be restricted by the determination section stop transmission of the bid information.

3. The bid management unit according to claim 1, further comprising:
a timer starting upon occurrence of a timer start event and controlling a timing to perform determination by the determination section.

4. The bid management unit according to claim 3, wherein the timer is capable of starting and stopping separately for each of the plurality of participant terminals.

5. The bid management unit according to claim 3, wherein the timer stops upon occurrence of a timer stop event.

6. The bid management unit according to claim 5, wherein, if a new timer start event occurs after the timer stops upon occurrence of the timer stop event, the timer starts upon occurrence of the new timer start event.

7. The bid management unit according to claim 1, wherein, prior to implementation of determination by the determination section, an alert is sent to the participant terminal whose bid submission is likely to be restricted by the determination of the determination section.

8. The bid management unit according to claim 1, wherein the determination section imposes a restriction on submission of bid information by a participant whose rank order based on the bid information is lower than a predetermined border rank order.

9. The bid management unit according to claim 3, wherein the timer start event is start of a bid market, and
the determination section imposes a restriction on submission of bid information by a participant terminal from which the bid management unit does not receive the bid information during a given time period from the start of the bid market.

10. The bid management unit according to claim 4, wherein
the timer start event for one of the plurality of participant terminals is receipt of a bid information from another participant, and
the timer stops when a rank order of the one of the plurality of participant terminals exceeds a border rank order, prior to implementation of determination by the determination section.

11. A bid management method for imposing a restriction on receipt of bid information in a bid management unit that receives bid information from a plurality of participant terminals connected through a communication network, the method comprising:
activating a timer to control a timing to determine whether to impose a restriction on receipt of the bid information upon occurrence of a timer start event;
determining whether to impose a restriction on receipt of the bid information transmitted from the participant terminals according to a predetermined determination condition at a timing controlled by the timer; and
imposing a restriction on receipt of the bid information according to the determination.

12. The bid management method according to claim 11, wherein the timer stops upon occurrence of a timer stop event.

13. The bid management method according to claim 12, wherein, if a new timer start event occurs after the timer stops upon occurrence of the timer stop event, the timer starts upon occurrence of the new timer start event.

14. The bid management method according to claim 11, wherein, prior to the activating step, an alert is sent to the participant terminal whose bid submission is likely to be restricted by determination in the determining step.

15. The bid management method according to claim 11, wherein the determining step imposes a restriction on submission of a bid by a participant whose rank order based on the bid information is lower than a predetermined border rank order.

16. A computer program product, in a computer readable medium, including instructions executed by a computer connectable to a plurality of participant terminals through a communication network, for causing the computer to implement a bid management process for imposing a restriction on receipt of bid information transmitted from the participant terminals, the bid management process comprising:
activating a timer to control a timing to determine whether to impose a restriction on receipt of the bid information upon occurrence of a timer start event;
determining whether to impose a restriction on receipt of the bid information transmitted from the participant terminals according to a predetermined determination condition at a timing controlled by the timer; and
imposing a restriction on receipt of the bid information according to the determination.

17. The computer program product according to claim 16, wherein the timer stops upon occurrence of a timer stop event.

18. The computer program product according to claim 17, wherein, if a new timer start event occurs after the timer stops upon occurrence of the timer stop event, the timer starts upon occurrence of the new timer start event.

19. The computer program product according to claim 16, wherein, prior to the activating step, an alert is sent to the participant terminal whose bid submission is likely to be restricted by determination in the determining step.

20. The computer program product according to claim 16, wherein the determining step imposes a restriction on submission of a bid by a participant whose rank order based on the bid information is lower than a predetermined border rank order.
